Europäisches Patentamt

European Patent Office

Office européen des brevets

(19)

(11) Veröffentlichungsnummer: **0 311 711**
**A1**

(12) **EUROPÄISCHE PATENTANMELDUNG**

(21) Anmeldenummer: 87115136.1

(22) Anmeldetag: 16.10.87

(51) Int. Cl.⁴: **B29C 67/22** , **B29C 33/48** , **B29C 33/50**

(43) Veröffentlichungstag der Anmeldung:
19.04.89 Patentblatt 89/16

(84) Benannte Vertragsstaaten:
AT CH DE ES FR GB IT LI NL

(71) Anmelder: **KLEVOTEC Gesellschaft für**
**rechnergestützte Systemanwendungen**
**mbH&Co.KG**
**Stettiner Strasse 3**
**D-4790 Paderborn(DE)**

(72) Erfinder: **Hahn, Ortwin, Dr.**
**Hüfferweg 9**
**D-4790 Paderborn(DE)**
Erfinder: **Wimmer, Gotfried**
**Schwaneyer Weg 12**
**D-4790 Paderborn(DE)**

(74) Vertreter: **Hanewinkel, Lorenz, Dipl.-Phys.**
**Patentanwalt Ferrariweg 17a**
**D-4790 Paderborn(DE)**

(54) **Sintervorrichtung für Formlinge mit Hinterschneidungen aus schäumbarem Kunststoff.**

(57) Eine Sintervorrichtung, in deren Formhohlraum (4) ein gerader oder in Auszugsrichtung sich erweiternder Formkern (3) angeordnet ist, ist bekannt.

Formlinge, deren Innenraum sich in Auszugsrichtung verjüngt, sollen einstückig herstellbar sein.

Der Formkern (3) besteht aus einem Mantel (32, - 37), der gesteuert zwischen zwei Stellungen radial formveränderlich ist und durch eine Stütze (31) lagefixiert ist. Der Mantel (32, - 37) besteht aus Segmenten oder aus elastischem Material. Die Stütze (31) wird dursch einen Stützkern oder Stützstifte gebildet.

Es lassen sich dünnwandige, hohle Formteile, insbes. für die Vollformgießtechnik, einstückig herstellen.

Fig.1

## Sintervorrichtung für Formlinge mit Hinterschneidungen aus schäumbarem Kunststoff

Die Erfindung betrifft eine Sintervorrichtung für einen Formling aus schäumbarem, vorgeschäumtem Kunststoff, die voneinander trennbare Formwände aufweist, zwischen denen ein Formhohlraum gebildet ist, in den ein steuerbarer Injektor für den Kunststoff und Durchlässe zu Kammern führen, die diese Formwände umgeben und denen steuerbar Prozeßdampf, ggf. Unterdruck und/oder Druckluft zuführbar ist, und in dem mindestens ein Formkern angeordnet ist, der aus einem lagefixierten, steuerbar formveränderlichen Mantel besteht.

Aus der EP-OS 83 102 413 ist eine Formvorrichtung bekannt zum Sintern von Formlingen aus schäumbarem, vorgeschäumtem Kunststoff, z.B. Polystyrol, die voneinander trennbare Formwände und einen verschieblichen Formkern aufweist, zwischen denen ein Formhohlraum gebildet wird, in dem ein Injektor zur Zuführung des vorgeblähten Kunststoffes und Durchlässe zur Zuführung von Prozeßdampf zum Heizen der Formwände und des Formkernes sowie zur Sinterung des Kunststoffes und zur Zuführung von Unterdruck und Druckluft zur Kühlung bzw. Ausstoßung eines fertigen Formlings führen. Der Formkern besteht aus einem elastischen Schlauch, der ein Rohr als Mantel umgibt, und durch Zuführung von Druckluft in seinem Durchmesser so erweitert werden kann, daß sich nach anschließendem Druckabbau der Formkern vom Formling löst und auf dem Rohr abstützt, so daß er ungehindert herausgezogen werden kann. Es ist mit der bekannten Vorrichtung nur möglich, Formlinge herzustellen, deren Ausnehmungen, gemäß der Formkerngestalt und der radialen Querschnitsserweiterung durch die Druckluft, sich im Querschnitt in Auszugsrichtung des Formkernes mit einer Entformungskonizität erweitert oder allenfalls einen gleichbleibenden Querschnitt besitzen.

Es ist weiterhin bekannt, für die Vollformgießtechnik schmelzbare Formteile aus geschäumtem und gesintertem Kunststoff gießfest zu ummanteln und als schmelzbare Kerne zu verwenden, womit gleichgestaltete dünnwandige Gußteile herstellbar sind, wobei die schmelzbaren Kerne zu komplizierten Baugruppen, die z.B. Hohlkörper bilden und die Ausnehmungen mit Hinterschneidungen und/oder in Achsrichtung variierende Krümmungen aufweisen, aus mehreren Formteilen, gewöhnlich durch Kleben, zusammenzufügen sind, was einen erheblichen Zeit- und Arbeitsaufwand erfordert und Zusammenbautoleranzen mit sich bringt.

Es ist Aufgabe der Erfindung eine Vorrichtung, sowie damit herstellbare einstückige Formlinge zu offenbaren, die Ausnehmungen mit Hinterschneidungen und/oder verschiedene Krümmungen aufweisen.

Die Lösung der Aufgabe besteht darin, daß der Mantel des Formkernes in dem Formhohlraum lagefixiert ist und seine Gestalt derart steuerbar zwischen zwei Stellungen verbringbar ist, daß in der ersten Stellung ein jeweils tiefer in den Formhohlraum hineinragender Mantelbereich eine größere Ausladung bezüglich einer Kernachse aufweist als ein weiter randseitig gelegener, engerer Mantelbereich und daß in der zweiten Stellung der jeweils tiefer in den Formhohlraum hineinragende Mantelbereich eine verringerte Ausladung aufweist, die maximal der der jeweils engsten Ausladung des weiter nach außen liegenden Mantelbereichs in der ersten Stellung entspricht.

Vorteilhafte Ausgestaltungen sind in den Unteransprüchen angegeben.

Die Hinterschneidungen lassen sich sowohl zirkular als auch sektoriell ausbilden, wobei die Außenkontur in einem weiten Rahmen vorgebbar ist, so daß insbesondere auch Kerne für die Vollformgießtechnik herstellbar sind, mit denen Hohlkörper mit Hinterschneidungen und über ihre Längserstreckung mehreren Krümmungen einstückig herstellbar sind. Diese einstückigen Hohlkörper weisen geringere Toleranzen der Abmessungn und keine Versatzkanten wegen entfallenden Stoßstellen gegenüber mehrteilig zusammengefügten Hohlkörpern auf.

Vorteilhaft ist der Formkern in einer ersten Ausgestaltung der Erfindung aus einem Stützkern mit in Achsrichtung pyramidenförmig verlaufende Schwalbenschwanzgleitführungen versehen, auf denen ein Mantel aus verschieblichen Mantelteilen gelagert ist, die andererseits radialverschieblich gelagert sind, so daß bei einer axialen Verschiebung des Stützkernes die Mantelteile radial expandierend bzw. kontrahierend verschoben werden. Vorteilhaft sind die Berühungsflächen der Mantelteile so gestaltet, daß diese während der Verschiebung aneinander gleiten. Die axiale Verschiebung des Stützkernes wird zweckmäßig durch einen Druckluftantrieb bewirkt. Der Stützkern ist zur Zuführung von Prozeß- und Heizdampf und von Kühl- und Entformungsmedien hohl ausgeführt und über ein Rohr mit einer Medienversorgungs-Vorrichtung verbunden. Zum Formhohlraum hin sind vom Kerninnenraum aus Durchlässe in Form von Bohrungen mit Düseneinsätzen eingebracht.

Eine weitere vorteilhafte Ausgestaltung eines steuerbar formveränderlichen Formkernes ist dadurch gegeben, daß der Mantel ein elastischer Mantelhohlkörper ist, der einen Stützkern umschließt und von diesem dicht gefaßt ist, wobei der Zwischenraum zwischen dem Mantelhohlkörper und dem Stützkern mit dem Stüztkerninnenraum in Verbindung steht, so daß er mit einem unter Druck stehenden Medium gesteuert gefüllt werden oder entleert werden kann, und daß der Stützkern Einbuchtungen trägt, in die der Mantel eintritt, wenn innenseitig ein geringerer Druck als außenseitig herrscht, und aus denen der Mantel sich hervorwölbt, wenn innenseitig ein Überdruck herrscht. Die geringste Ausladung des Mantels ist somit durch die Form des Stützkernes bestimmt, auf den sich der Mantel formschlüssig abstützt, und seine größte Ausladung ist durch seine aufgeblähte Gestalt und die Einfassung und eine ggf. verbleibende Abstützung am Stützkern gegeben.

Als elastisches Material für den Mantelhohlkörper wird vorteilhaft Silikongummi oder Polytetrafluorethylen verwandt, wobei eine geringe Wärmekapazität und geringe Wärmeleitfähigkeit ein schnelles Heizen und Kühlen fördern.

Eine weitere vorteilhafte Vorrichtung, die insbes. zur Herstellung dünnwandiger, mehrfach gekrümmter Formlinge geeignet ist, wie sie z.b. Anordnungen von Ansaugkrümmern von Verbrennungsmotoren aufweisen, besteht darin, daß der Formkern als elastischer schlauchartiger Mantel ausgebildet ist, der an einem Ende in der Formwand am gesamten Umfang gehalten ist und ggf. mit dem anderen Ende im aufgeblähten Zustand in der Formwand in einer passenden Ausnehmung gehalten ist, sowie, soweit erforderlich, mit Stützstiften im Zwischenbereich gehalten ist, solange die Injektion des Kunststoffgranulates erfolgt. Nach der Injektion werden die Stützstifte in die Formwand zurückgezogen, so daß das Granulat porenfrei zusammensintert. Beim Herausziehen des Formkernes wird der Innenraum evakuiert, so daß der Mantel kollabiert und dann drucklos gemacht, so daß er erschlafft und widerstandslos herausziehbar ist. Das Wiedereinführen des Formkernes erfolgt bei geringem Druck, so daß er eine gewisse Steifigkeit und seine Grundform annimmt, bis sich dessen Ende in der Ausnehmung in der gegenüberliegenden Formwand befindet. Dann werden die Stützstifte in die Stützposition gebracht und anschließend der endgültige Fülldruck eingegeben, so daß der Mantel die vorgegebene endgültige Form und Stellung einnimmt.

Vorteilhafte Ausgestaltungen sind in den Fig. 1 bis 6 dargestellt.

Fig. 1 zeigt einen axialen Querschnitt I-I eines Ausschnittes einer Formvorrichtung mit einem Formkern erster Art;

Fig. 2 zeigt einen radialen Schnitt II-II durch den Formkern nach Fig. 1;

Fig. 3 zeigt einen axialen Querschnitt III-III durch einen Ausschnitt einer Formvorrichtung mit einem Formkern zweiter Art;

Fig. 4 zeigt eine Aufsicht auf die Formvorrichtung zweiter Art;

Fig. 5 zeigt einen axialen Querschnitt IV-IV durch eine Formvorrichtung zweiter Art;

Fig. 6 zeigt einen Achsialquerschnitt einer Formvorrichtung dritter Art.

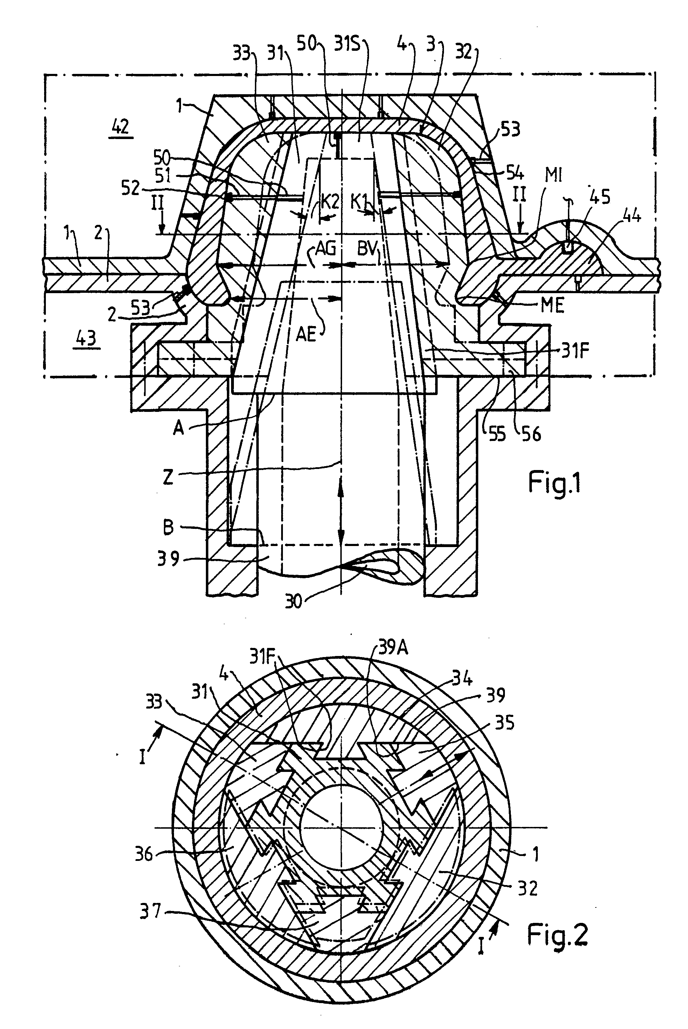

Fig. 1 zeigt eine Formvorrichtung, die aus zwei gegeneinander verschieblich angeordneten - die Verschiebevorrichtung und Lagerung sind nicht dargestellt - Formwänden (1, 2) besteht, die einen Formhohlraum (4) umschließen, in dem ein Injektor (41) mündet. Die Formwände (1, 2) sind von Kammern (42, 43) umgeben, von denen aus Durchlässe (53) mit Düsen (54) in dem Formhohlraum (4) führen. die Kammern (43, 43) stehen in bekannter Weise steuerbar mit einer Dampf-, Druckluft-, Vakuum- und Entsorgungseinrichtung in Verbindung, so daß die Verfahrensschritte: Füllen, Heizen, Sintern, Kühlen und Entformen nacheinander zyklisch gesteuert ausgeführt werden können.

In der Formwand (2) ist ein Formkern (3) eingesetzt. Dieser besteht aus einem pyramidenförmigen Stützkern (31), auf dem Mantelteile (32, 34, 36; 33, 35, 37) (s. Fig. 2) umgebend und mit formschlüssigen Führungen (31F) nach Art einer Schwalbenschwanzführung verschieblich angeordnet sind. Drei der Mantelteile (32, 34, 36) weisen einen Kreissegmentquerschnitt auf, und die jeweils dazwischenliegenden Mantelteile (33, 35, 37) sind trapezartig keilförmig ausgebildet, wobei die Außenkontur ein Kreisabschnitt ist. Alle Mantelteile sind in einer Ringnut (55) mit dazu passenden Ansätzen (56) in radialer Richtung verschieblich geführt. Der pyramidenförmige Stützkern (31) hat einen koachsialen Rohransatz (38), der gegenüber der Formwand (2) axialverschieblich zwischen zwei Stellungen (A, B) gelagert ist.

Befindet sich der Stützkern (31) in der eingeschobenen Stellung (A), so treibt er die Mantelteile radial auseinander, so daß sie die vorgegebene Gestalt zum Füllen des Formhohlraumes (4) und zum Sintern des Formlings einnehmen. Im vorgegebenen Beispiel bilden die Mantelteile insgesamt dann radial eine kreisförmige Außenkontur. In der zurückgezogenen Stellung (B) sind die Mantelteile durch die Schwalbenschwanzführung (31F) zusammengezogen. Die trapezförmigen Mantelteile (33, 35, 37) weisen eine stärkere Keilneigung (K1) an der Pyramide (31) auf als die segmentförmigen Mantelteile (32, 34, 36) mit der geringeren Keilneigung (K2), so daß die Mantelteile mit ihren Grenzflächen (39, 39A) beim Verschieben aneinander gleiten.

In der eingeschobenen Stellung (A) des Stützkernes (31) sind die Außenkonturen der Mantelteile insgesamt kreisförmig. Dabei liegt der weiteste Mantelbereich (MI) mit der größten Ausladung (AG) bezogen auf die Zentralachse (Z) weiter innen im Formhohlraum (4) als der engste Mantelbereich (ME) mit der Ausladung (AE). In der zurückgezogenen Stellung (B) liegen die Segmentmantelteile (32 34, 36) mit ihren äußeren Kanten aneinander an, und die Trapezmantelteile (33, 35, 37) sind nach innen verlagert. Die verkleinerte Ausladung (BV) des weitesten Mantelbereichs (MI) ist dabei enger als die engste Ausladung (AE) im engsten Mantelbereich (ME) bei eingeschobenem Stützkern (31) ist, so daß eine freie Entformung des Formlings von dem Formkern (3) ermöglicht ist.

Der Innenraum des Rohres (38) führt in einen stirnseitig geschlossenen Innenraum (30) des Stützkernes (31), und von dort führen Durchlässe (50, 51) mit Düsen (52) durch die Mantelteile (32, - 37) und die Stirnwand (31S) des pyramidenstumpfartig ausgebildeten Stützkernes (31) in den Formhohlraum (4). Über das Rohr (38) steht der Innenraum (30) mit der Versorgungsvorrichtung für Dampf, Druckluft und ggf. Vakuum in Verbindung, so daß der Formling auch innenseitig dicht gesintert und gut gekühlt wird, wodurch eine hohe Qualität und Formgenauigkeit erreicht wird.

Die äußere Kontur des gezeigten Formkernes läßt sich deren Erfordernissen gemäß variieren. Weiterhin läßt sich die Zahl der Segmente vergrößern, und eine Beschränkung auf einen oder mehrere Sektorabschnitte ist möglich. Bei außenseitig mit Hinterschneidungen gestalteten Formlingen wird die Formwand (1) aus trennbaren Formwandteilen, z.B. zweiteilig ausgestaltet.

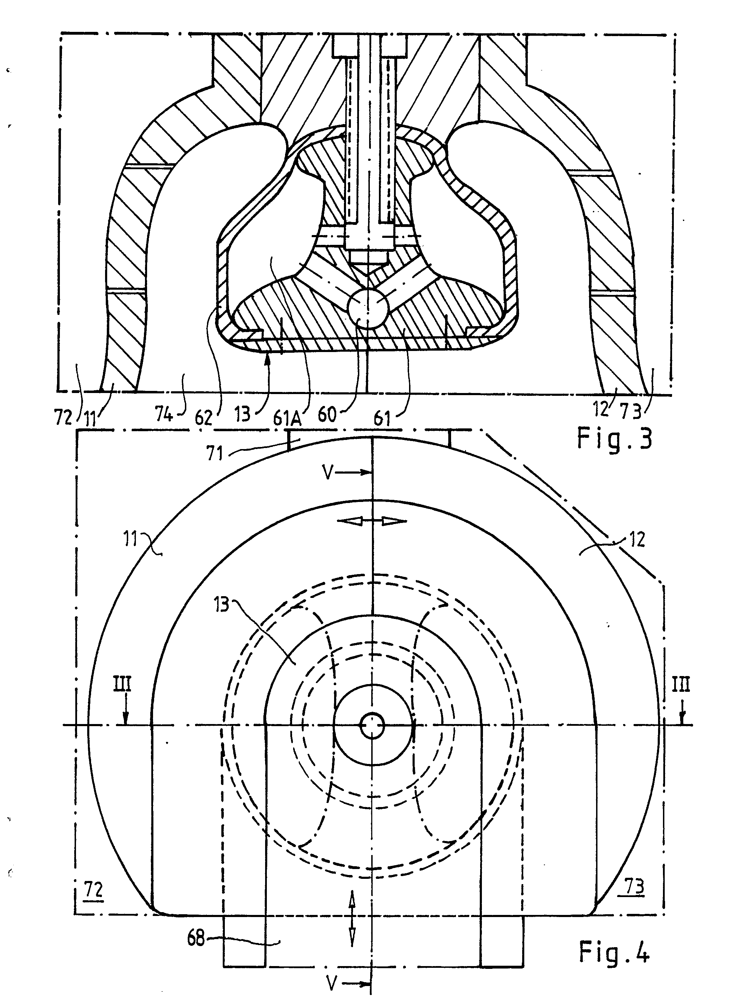

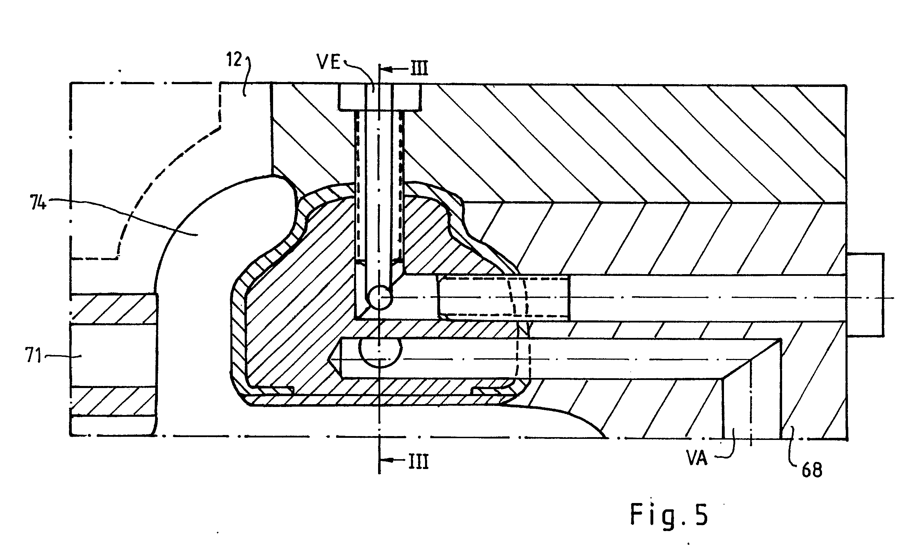

Fig. 3 zeigt einen axialen Schnitt III-III durch einen Formkern (13), der von einem Stützkern (61) gebildet ist, der von einem elastischen Mantel (62) umgeben ist und in den Formhohlraum (7) hineinragt, der von zwei trennbaren Formwänden (11, l2) umgeben ist, die wiederum von Kammern (72, 73) zur steuerbaren Zuführung von Wärme, Kühlung, Dampf, Druckluft etc. umgeben sind. Der Mantel (62) ist ein Hohlkörper, der jeweils endseitig am Stützkern (62) dicht eingeklemmt ist. Der Stützkern (61) weist in seinen Seitenbereichen Ausnehmungen (61A) auf, in die durch einen Innenraum (60) ein Versorgungsanschluß (VA) für die steuerbare Zuführung von Dampf, Druckluft und Unterdruck führt. Dadurch nimmt der Mantel (62) bei einer Zuführung von Unterdruck eine eingebeulte Stellung (A1) ein, in der er sich in die Ausnehmungen (61A) einlegt, und bei einer Heißdampf- oder Druckluftzuführung wird der Mantel (62) in eine zweite aufgeblähte, ausgebeulte Stellung (B1) verbracht. In der aufgeblähten Stellung (B1) wird der Formhohlraum (74) durch den Injektor (71), s. Fig. 5, gefüllt. Anschließend wird der Kunststoff versintert und danach gekühlt. Der Mantel (62) läßt sich dabei durch ein jeweils unter Druck stehendes Heiz- bzw. Kühlmedium auf Sinter- bzw. Kühltemperatur bringen. Dazu wird bei der Zuführung des jeweils anderen Mediums das vorher in den Ausnehmungen (62A) und zwischen dem Stützkern (61) und dem Mantel (62) und im Innenraum (60) vorhandene Medium zweckmäßig über einen Entsorgungsanschluß (VE) unter Druck stehend abgeführt.

Nach erfolgter ausreichender Kühlung wird dem Innenraum (60) Unterdruck zugeführt, woraufhin der Formkern (13), der sich an einem Querschieber (68) - s. Fig. 5 - befindet, aus dem Formhohlraum (74) herausgezogen wird, wonach die Formwände (11, 12) auseinandergezogen werden und der Formling entfernt wird. In dem Schnitt des Querschiebers (68) V-V (Fig. 5) sind die Verläufe des Ver- und Entsorgungsanschlusses (VA, VE) dargestellt.

Fig. 4 zeigt die Anordnung des Querschiebers (68) in der Trennebene V-V der Formwände (11, 12) in Aufsicht.

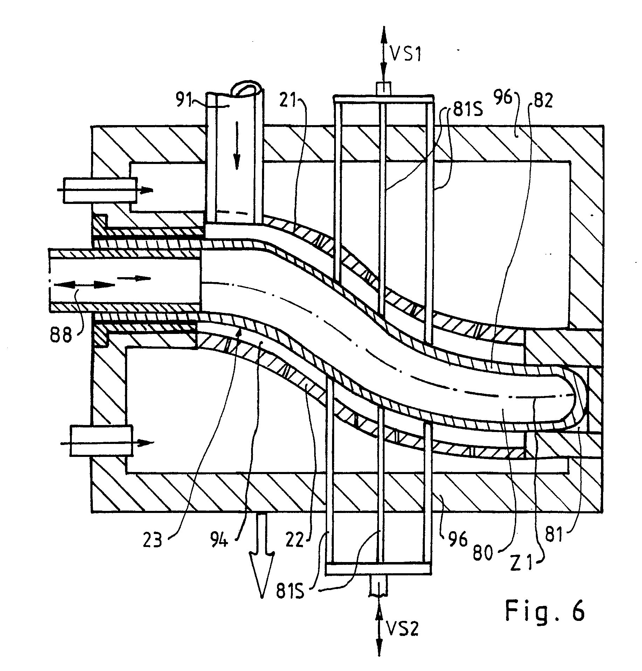

Eine dritte Ausführungsform der Vorrichtung zeigt Fig. 6. Hierbei ist zwischen zwei Formwänden (21, 22) im Formhohlraum (94) ein Formkern (23) angeordnet, der aus einem schlauchartigen, mehrfach gekrümmten flexiblen Mantel (82) besteht, der an einem Ende verschlossen ist und am anderen Ende an einen verschieblich gelagerten Rohrschieber (88) angeschlossen und dort gehalten ist. Das verschlossene Ende ist in einer Öffnung (81) in den Formwänden (21, 22) gehalten, sofern der Innenraum (80) Überdruck gegenüber dem Formhohlraum (80) aufweist. In dem Formhohlraum (80) sind Stützstifte (80S) zur Lagebestimmung des Mantels (82) eingeführt. Sie sind jeweils in den Formwänden (21, 22) und den Kammerwänden (95, 96) verschieblich gelagert und jeweils mit einem Antrieb (VS1, VS2) z.B. einem Pneumatikzylinder, gekoppelt. Die Stützstifte (80S) werden, während das Kunststoffgranulat durch den Injektor (91) in den Formhohlraum (94) eingeblasen wird, gesteuert in die Stützposition verbracht und anschließend zurückgezogen, so daß ihre Enden etwa bündig mit der Formwand (21, 22) stehen. Im übrigen ist die Gestalt des Formkernes (23) durch eine in den Mantel (82) eingebettete Armierung aus Stahl- oder Glasfasern gegeben. Wird durch den Rohrschieber (88) der Innenraum (80) des Formkernes (23) mit Unterdruck beaufschlagt, so nimmt seine seitliche Ausladung gegenüber der Achse (Z1) ab, und bei Gleichduck mit dem umgebenden Formhohlraum (94) nimmt seine Steifgkeit so weit ab, daß er ohne den Formling zu beschädigen mit dem Rohrschieber (88) herausgezogen werden kann. Danach werden die beiden Formhälften mit den Formwänden (21, 22) getrennt und so der Formling ausgeworfen, wobei vorteilhaft die Stützstifte (81S) durch die Antriebe (VS1, VS2) als Auswerfer betätigt werden können.

Die in einer Ebene dargestellte Achse (Z1) kann auch dreidimensional gekrümmt verlaufen und abgewinkelt enden. Durch Teilung mehrerer Formkerne (23) lassen sich so komplizierte, dünnwandige Teile wie Ansaugverteiler von Verbrennungsmotoren einstückig herstellen.

Eine vorteilhafte Ausgestaltung der Vorrichtung zur Herstellung von schmelzbaren Kernen für die Vollformgießtechnik ist in Fig. 1 dagestellt, wo an den Formling einstückig ein Angußstück (44) angeformt ist. Aus dem Formling mit dem angeformten Angußstück wird durch eine Ummantelung mit temperaturbeständigem Material eine Gießform hergestellt, bei der das Angußstück zur Einleitung des flüssigen Metalles dient. Da dieses Angußstück nach Fertigstellung des Metallgießlings entfernt wird, ist dessen Maßhaltigkeit unkritisch. Aus diesem Grund wird in dem Formhohlraum des Angußstückes (44) ein Druck- und/oder Temperatursensor (45) hineinragend angeordnet, wodurch eine wesentlich exaktere Messung des Sinterdruckverlaufes bzw. der Sintertemperatur ermöglicht wird, als dies bei der bekannten bündigen Anordnung von Sensoren in der Formwand möglich war. Dies führt insbesondere bei den für die Vollformgießtechnik herzustellenden dünnwandigen Formlingen geringen spezifischen Gewichts zu einer hohen Qualität und Gleichartigkeit derselben, wenn die Sensorsignale erhöhter Genauigkeit zur Regelung des Sinterprozesses und der anschließenden Abkühlzeit genutzt werden.

**Ansprüche**

1. Sintervorrichtung für einen Formling aus schäumbarem, vorgeschäumtem Kunststoff, die voneinander trennbare Formwände (1, 2; 11, 12; 21, 22) aufweist, zwischen denen ein Formhohlraum (3; 13; 23) gebildet ist, in den ein steuerbarer Injektor (41, 71, 91) für den Kunststoff und Durchlässe (50, 51, 53) zu Kammern (42, 43; 72, 73) führen, die diese Formwände (1, 2; 11, 12; 21, 22) umgeben und denen steuerbar Prozeßdampf, ggf. Unterdruck und/oder Druckluft zuführbar ist, und in dem mindestens ein Formkern (3, 13, 23) angeordnet ist, der aus einem lagefixierten, steuerbar formveränderlichen Mantel (32 37; 62; 82) besteht, dadurch gekennzeichnet, daß der Mantel (32, - 37); 62, 82) des Formkernes (3, 13, 23) in dem Formhohlraum (4; 74; 94) lagefixiert ist und seine Gestalt derart steuerbar zwischen zwei Stellungen (A, B) verbringbar ist, daß in der ersten Stellung (A) ein jeweils tiefer in den Formhohlraum (4) hineinragender Mantelbereich (MI) eine größere Ausladung (AG) bezüglich einer Kernachse (Z) aufweist als ein weiter randseitig gelegener, engerer Mantelbereich (ME) und daß in der zweiten Stellung (B) der jeweils tiefer in den Formhohlraum hineinragende Mantelbereich (MI) eine verringerte Ausladung (BV) aufweist, die maximal der der jeweils engsten Ausladung (AE) des weiter nach außen liegenden Mantelbereichs (ME) in der ersten Stellung (A) entspricht.

2. Sintervorrichtung nach Anspruch 1, dadurch gekennzeichnet, daß der Formkern (3) aus einem pyramidenförmigen Stützkern (31) besteht, auf dessen Seitenflächen formschlüssig in Gleitführungen (31F) Mantelteile (32, - 37) gelagert sind, die andererseits in der Formwand (2) radialverschieblich gelagert sind.

3. Sintervorrichtung nach Anspruch 2, dadurch gekennzeichnet, daß der Stützkern (31) an einem zwischen den beiden Stellungen (A, B) axialverschieblichen Rohr (38) befestigt ist, das in einen Innenraum (30) mündet, von dem die Mantelteile (32, - 37) in den Formhohlraum (4) führen, wenn der Stützkern (31) sich in der ersten Stellung (A) befindet.

4. Sintervorrichtung nach Anspruch 3, dadurch gekennzeichnet, daß der Stützkern (31) ein Pyramidenstumpf ist, dessen Stirnseite mit einer Stirnwand (31S) verschlossen ist und in dem sich Durchlässe (50) befinden, die teilweise direkt und teilweise über weiterführende Durchlässe (51) durch die Mantelteile (32, 38) in den Formhohlraum (4).

5. Sintervorrichtung nach Anspruch 4, dadurch gekennzeichnet, daß die Mantelteile (32, - 37) jeweils abwechselnd angeordnete segmentförmige Mantelteile (32, 34, 36) und etwa trapezförmige Mantelteile (33, 35, 37) sind, deren Schmalseite mit den Segmenten eine geschlossene Kontur bilden, wenn der Stützkern (31) sich in der ersten Stellung (A) befindet, und daß der Stützkern (31) steilere Neigungswinkel (K1) an den Gleitführungen (31F) der trapezförmigen Mantelteile (33, 35, 37) aufweist als an den Gleitführungen (31F) der segmentförmigen Mantelteile (39, 34, 38), so daß die Mantelteile (32, - 37) jeweils an den benachbarten Grenzflächen (39, 39A) beim Verbringen aus der ersten Stellung (A) in die zweite Stellung (B) aneinander gleiten.

6. Sintervorrichtung nach Anspruch 1, dadurch gekennzeichnet, daß der Formkern (13) aus einem Stützkern (61) mit Ausnehmungen (61A) besteht, den ein elastischer Mantel (62) umgibt, der randseitig dicht gefaßt ist, und wobei der Zwischenraum zwischen dem Mantel (62) und dem Stützkern (61) im Bereich der Ausnehmungen (61A) über einen Innenraum (60) mit einem Versorgungsanschluß (VA) und vorzugsweise einem Entsorgungsanschluß (VE) jeweils zu einer steuerbaren Medienver- und -entsorgungsvorrichtung verbunden sit, so daß durch Unter- bzw. Überdruckzuführung der Mantel (62) in eine in die Ausnehmungen (62A) eingebeulte Stellung (A1) bzw. eine aus diesem ausgebeulte, in den Formhohlraum (74) hineinragende Stellung (B1), verbringbar ist.

7. Sintervorrichtung nach Anspruch 6, dadurch gekennzeichnet, daß der Formkern (13) an einem Querschieber (68) befestigt ist, der relativ zu den Formwänden (11, 12) verschieblich angeordnet ist.

8. Sintervorrichtung nach Anspruch 1, dadurch gekennzeichnet, daß der Formkern (23) als elastischer Hohlkörper ausgebildet ist, der an einem Rohrschieber (88) dicht befestigt ist, der in den Formwänden (21, 22) verschieblich gelagert ist, und daß der Formkern (23) sich an einer der Formwände (21, 22) und/oder in einer Öffnung (81) der Formwände (21, 22) form- und kraftschlüssig abstützt, wenn seinem Innenraum (80) ein hoher Überdruck gegenüber dem umgebenden Druck zugeführt wird.

9. Sintervorrichtung nach Anspruch 8, dadurch gekennzeichnet, daß der Formkern (23) schlauchartig und uber seine Längenausdehnung variabel gekrümmt gestaltet ist und sein geschlossenes Ende bei einem leichten Überdruck in die Öffnung (81) in loser Fassung einführbar ist.

10. Sintervorrichtung nach einem der Ansprüche 6 bis 9, dadurch gekennzeichnet, daß in mindestens einer der Formwände (11, 12; 21, 22) Stützstifte (81S) verschieblich gelagert sind, die mit ihrem einen Ende die Kontur des Formkernes (23) fixieren, wenn sie in eine Stützstellung verbracht sind, oder etwa bündig in der Formwand (21, 22) liegen, wenn sie in eine zweite Stellung verbracht sind, und die anderenends mit einem Verschiebeantrieb (VS1, VS2) verbunden sind.

11. Sintervorrichtung nach Anspruch 10, dadurch gekennzeichnet, daß die Stützstifte (81S) in der Richtung verschieblich angeordnet sind, in der die Formwände (21, 22) gegeneinander verschieblich gelagert sind, so daß die Stützstifte (81S) als Auswerfer betätigbar sind, wenn die Form geöffnet ist.

12. Sintervorrichtung nach Anspruch 6 bis 11, dadurch gekennzeichnet, daß der Mantel (62, 82) aus Silikonkautschuk oder Polytetrafluoräthylen mit eingelagerten, flexiblen Armierungen aus Stahl- oder Glasfasern besteht.

13. Sintervorrichtung nach einem der Ansprüche 6 bis 8, dadurch gekennzeichnet, daß mehrere Formkerne (23) mit unterschiedlichen Krümmungen nebeneinander zwischen den Formwänden (21, 22) angeordnet sind, so daß der Formhohlraum (74) einen Ansaugverteiler eines Verbrennungsmotores entspricht.

14. Sintervorrichtung nach einem der vorstehenden Ansprüche, dadurch gekennzeichnet, daß der Formhohlraum (4) einen Formhohlraumbereich für ein Angußstück (44) umfaßt, durch das eine Form füllbar ist, die mit dem Formling einschließlich des Angußstückes (44) durch eine Ummantelung mit temperaturbeständigem Material nach der Vollformgießtechnik herstellbar ist.

15. Sintervorrichtung nach Anspruch 14, dadurch gekennzeichnet, daß in den Formhohlraumbereich des Angußstückes (44) hineinragend ein Druck- und/oder Temperatursensor (45) angordnet ist, der jeweils der Regelung des Sinterprozesses und der anschließenden Abkühlung des Formlinges dient.

Fig.1

Fig.2

72 11    74   62   13   61A   60   61           12 73

71

**Fig.3**

V

11                                          12

13

III                                          III

72                                          73

68

V

**Fig.4**

Fig. 5

EP 0 311 711 A1

Fig. 6

Europäisches
Patentamt

**EUROPÄISCHER RECHERCHENBERICHT**

Nummer der Anmeldung

EP 87 11 5136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 592 207 (GEYER) * Figur 1-5b; Seite 2, Zeile 78 - Seite 3, Zeile 122 * --- | 1-5 | B 29 C 67/22 B 29 C 33/48 B 29 C 33/50 |
| X | GB-A-2 100 172 (VON HOLDT) * Figuren 1-16 * --- | 1,2 | |
| X | US-A-3 651 180 (GLUECKERT) * Figuren 1-4 * --- | 1,6,12 | |
| A | FR-A-1 558 636 (TETRA PAK) * Figuren 1a,1b * --- | 6,12 | |
| A | FR-A-2 235 779 (SEMPERIT) * Figuren 2,3 * ----- | 6 | |

**RECHERCHIERTE SACHGEBIETE (Int. Cl.4)**

B 29 C

Der vorliegende Recherchenbericht wurde für alle Patentansprüche erstellt

| Recherchenort | Abschlußdatum der Recherche | Prüfer |
|---|---|---|
| DEN HAAG | 24-06-1988 | KUSARDY R. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
  Dokument

EPO FORM 1503 03.82 (P0403)